# EUROPEAN PATENT SPECIFICATION

(11) **EP 0 765 299 B1**
(45) Date of publication and mention of the grant of the patent: **16.08.2000**
(21) Application number: 96912642.4
(22) Date of filing: 09.04.1996
(51) Int. Cl.: C06B 47/08, C06D 5/06

(54) **NONAZIDE GAS GENERATING COMPOSITIONS WITH A BUILT-IN CATALYST**
KATALYSATOR ENTHALTENDE, AZIDFREIE GASERZEUGENDE ZUSAMMENSETZUNGEN
COMPOSITIONS GENERATRICES DE GAZ DE TYPE NON AZIDE A CATALYSEUR INCORPORE

(30) Priority: 14.04.1995 US 421948
(43) Date of publication of application: 02.04.1997
(73) Proprietor: AUTOMOTIVE SYSTEMS LABORATORY INC., Farmington Hills Michigan 48331 (US)
(72) Inventor: KHANDHADIA, Paresh, S., Troy, MI 48098 (US)
(74) Representative: Woods, Geoffrey Corlett
(86) International application number: PCT/US96/04877
(87) International publication number: WO 96/32363

(56) References cited:
- EP-A- 0 509 763
- EP-A- 0 536 916
- WO-A-95/00462
- WO-A-95/04014
- DE-A- 19 505 568
- US-A- 4 948 439
- US-A- 5 035 757
- US-A- 5 472 647
- US-A- 5 500 059
- US-A- 5 501 823
- US-A- 5 516 377

## Description

The present invention relates generally to gas generating compositions used for inflating occupant safety restraints in motor vehicles, and more particularly to nonazide gas generants that produce combustion products having acceptable toxicity levels in the event of exposure to vehicle occupants.

Inflatable occupant restraint devices for motor vehicles have been under development worldwide for many years, including the development of gas generating compositions for inflating such occupant restraints. Because the inflating gases produced by the gas generants must meet strict toxicity requirements, most, if not all, gas generants now in use are based on alkali or alkaline earth metal azides, particularly sodium azide. When reacted with an oxidizing agent, sodium azide forms a relatively nontoxic gas consisting primarily of nitrogen. Moreover, combustion of azide-based gas generants occurs at relatively low temperatures, which allows for the production of nontoxic inflating gases without a need for additives to reduce the combustion temperature.

However, azide-based gas generants are inherently difficult to handle and entail relatively high risk in manufacture and disposal. Whereas the inflating gases produced by azide-based gas generants are relatively nontoxic, the metal azides themselves are conversely highly toxic, thereby resulting in extra expense and risk in gas generant manufacture, storage, and disposal. In addition to direct contamination of the environment, metal azides also readily react with acids and heavy metals to form extremely sensitive compounds that may spontaneously ignite or detonate.

In contradistinction, nonazide gas generants provide significant advantages over azide-based gas generants with respect to toxicity related hazards during manufacture and disposal. Moreover, most nonazide gas generant compositions typically supply a higher yield of gas (moles of gas per gram of gas generant) than conventional azide-based occupant restraint gas generants.

However, nonazide gas generants heretofore known and used produce unacceptably high levels of toxic substances upon combustion. The most difficult toxic gases to control are the various oxides of nitrogen (NO_{X}) and carbon monoxide (CO).

Reduction of the level of toxic NO_{X} and CO upon combustion of nonazide gas generants has proven to be a difficult problem. For instance, manipulation of the oxidizer/fuel ratio only reduces either the NO_{X} or CO. More specifically, increasing the ratio of oxidizer to fuel minimizes the CO content upon combustion because the extra oxygen oxidizes the CO to carbon dioxide. Unfortunately, however, this approach results in increased amounts of NO_{X}. Alternatively, if the oxidizer/fuel ratio is lowered to eliminate excess oxygen and reduce the amount of NO_{X} produced, increased amounts of CO are produced.

The relatively high levels of NO_{X} and CO produced upon combustion of nonazide gas generants, as opposed to azide-based gas generants, are due primarily to the relatively high combustion temperatures exhibited by nonazide gas generants. For example, the combustion temperature of a sodium azide/iron oxide gas generant is 969°C (1776°F), while the nonazide gas generants exhibit considerably higher combustion temperatures, such as 1818°C (3304°F). Utilizing lower energy nonazide fuels to reduce the combustion temperature is ineffective because the lower energy nonazide fuels do not provide a sufficiently high gas generant burn rate for use in vehicle occupant restraint systems. The burn rate of the gas generant is important to ensure that the inflator will operate readily and properly.

Another disadvantage created by the high combustion temperatures exhibited by nonazide gas generants is the difficulty presented in forming solid combustion particles that readily coalesce into a slag. Slag formation is desirable because the slag is easily filtered, resulting in relatively clean inflating gases. In azide-based gas generants, the lower combustion temperatures are conducive to solid formation. However, many common solid combustion products which might be expected from nonazide gas generants are liquids at the higher combustion temperatures displayed by nonazide gas generants, and are therefore difficult to filter out of the gas stream.

Therefore, a need exists for a nonazide gas generant that can produce inflating gases in which toxic gases, such as NO_{X} and CO, are minimized without compromising the desired burn rate of the gas generant.

The aforesaid problems are solved, in accordance with the present invention, by a nonazide gas generating composition which is nontoxic itself, and also produces inflating gases upon combustion which have reduced levels of NO_{X} and CO. The manufacturing, storage, and disposal hazards associated with unfired azide inflators are eliminated by the gas generants of the invention. The reduced content of toxic gases produced upon combustion allow the gas generants of the present invention to be utilized in vehicle occupant restraint systems while protecting the occupants of the vehicle from exposure to toxic inflating gases, such as NO_{X} and CO, which heretofore have been produced by nonazide gas generants.

Specifically, the present invention comprises a four component gas generant comprising a nonazide fuel, an oxidizer, a slag former and a built-in catalyst. The nonazide fuel is selected from tetrazoles, bitetrazoles and triazoles. The oxidizer is selected from inorganic nitrates, chlorates, or perchlorates of alkali or alkaline earth metals. The slag forming compound is selected from alkali metal oxides, hydroxides, perchlorates, nitrates, chlorates, silicates, borates or carbonates, or from alkaline earth and transition metal hydroxides, perchlorates, nitrates, or chlorates, or from silicon dioxide, alkaline earth metal oxides, and naturally and synthetically manufactured magnesium and aluminum silicate compounds, such as naturally occuring or synthetically formulated clay and talc, preferably clay or talc.

In accordance with the present invention, the built-in catalyst actively promotes the conversion of NOₓ and CO to nitrogen gas (N₂) and CO₂, respectively, so as to reduce the toxicity of the inflating gases produced by the gas generants. The built-in catalyst is selected from a zinc or copper salt of 5-aminotetrazole or zinc or copper oxide.

In accordance with the present invention, the fuel utilized in the nonazide gas generant maximizes the nitrogen content of the fuel and regulates the carbon and hydrogen content thereof to moderate values. Such fuels are typically selected from azole compounds, particularly tetrazole compounds such as aminotetrazole, tetrazole, 5-nitrotetrazole, 5-nitroaminotetrazole, bitetrazole and triazole compounds such as 1, 2,4-triazole-5-one or 3-nitro-1,2,4-triazole-5-one. A preferred embodiment utilizes 5-aminotetrazole as the fuel because of cost, availability and safety.

Oxidizers generally supply all or most of the oxygen present in the system. The oxidizer actively supports combustion and further suppresses formation of CO. The relative amounts of oxidizer and fuel used is selected to provide a small excess of oxygen in the combustion products, thereby limiting the formation of CO by oxidizing the CO to carbon dioxide. The oxygen content in the combustion products should be 0.1% to 5% and more preferably 0.5% to 2%. The oxidizer is chosen from alkali metal nitrates, chlorates and perchlorates and alkaline earth metal nitrates, chlorates, and perchlorates. Strontium and barium nitrates are easy to obtain in the anhydrous state and are excellent oxidizers. Strontium nitrate and barium nitrate are most preferred because of the more easily filterable solid products formed, as described hereinbelow.

A slag former is included in the gas generant in order to facilitate the formation of solid particles that may then be filtered from the gas stream. A convenient method of incorporating a slag former into the gas generant is by utilizing an oxidizer or a fuel which also serves in a dual capacity as a slag former. The most preferred oxidizer which also enhances slag formation is strontium nitrate, but barium nitrate is also effective.

The catalyst, which is mixed directly into the gas generating composition, promotes the conversion of CO and NOₓ to CO₂ and N₂. More specifically, metals, which are present in the form of a salt of a 5-amino tetrazole or a transitional metal oxide, catalyze two reactions. For example, a typical primary reaction is as follows: ${\text{2CO + 2NO → 2CO}}_{\text{2}} {\text{+ N}}_{\text{2}}$It is also believed that the built-in catalyst also promotes a secondary decomposition reaction, as follows: ${\text{2NO → N}}_{\text{2}} {\text{+ O}}_{\text{2}}$

The amount of catalyst which is included in the gas generating mixtures of the instant invention is within a range of about 5% by weight to about 15% by weight of the gas generant mixture. The fuel is present in the gas generants of the present invention in a concentration of 26% to 32% by weight, the oxidizer is present in a concentration of 52% to 58% by weight, and the slag forming compound is present in a concentration of 2% to 10% by weight.

One skilled in the art will readily appreciate the manner in which the aforesaid combinations of ingredients are combined to form the gas generant compositions of the present invention. For example, the materials may be dry-blended and attrited in a ball-mill and then pelletized by compression molding. The present invention may be exemplified by the following representative examples wherein the components are quantified in weight percent.

### Example 1

A mixture of 5-aminotetrazole (5-AT) strontium nitrate [Sr(NO₃)₂], a copper salt of 5-AT, and clay is prepared having the following composition in percent by weight: 28.62% 5-AT, 57.38% Sr(NO₃)₂, 8.00% clay, and 6.00% of the copper salt of 5-AT.

The above materials are dry-blended, attrited in a ball-mill, and pelletized by compression molding.

### Example 2

A mixture of 5-AT, Sr(NO₃)₂, talc, and a zinc salt of 5-AT is prepared as described in Example 1 having the following composition in percent by weight: 28.62% 5-AT, 57.38% Sr(NO₃)₂, 6.00% talc, and 8.00% of the zinc salt of 5-AT.

## Claims

1. A four-component nonazide gas generating composition which forms gases upon combustion and which is useful for inflating a vehicle occupant safety restraint device, the composition comprising at least one of each of the following functional groups of materials:
a. a fuel;
b. an oxidizer compound;
c. a slag forming compound; and
d. a catalyst which promotes the conversion of toxic oxides of nitrogen and carbon monoxide to nitrogen gas and carbon dioxide,
wherein the fuel is selected from tetrazoles, bitetrazoles and triazoles and is present in a concentration of 26% to 32% by weight of the composition, the oxidizer compound is selected from inorganic nitrates, chlorates or perchlorates of alkali or alkaline earth metals and is present in a concentration of 52% to 58% by weight of the composition, the slag forming compound is selected from alkali metal oxides, hydroxides, perchlorates, nitrates, chlorates, silicates, borates or carbonates, or from alkaline earth and transition metal hydroxides, perchlorates, nitrates, or chlorates, or from silicon dioxide, alkaline earth metal oxides, and naturally and synthetically manufactured magnesium and aluminium silicate compounds, such as naturally occurring or synthetically formulated clay and talc and is present in a concentration of 2% to 10% by weight of the composition, and the catalyst is selected from a zinc salt of 5-aminotetrazole, a copper salt of 5-aminotetrazole, copper oxide and zinc oxide and is present in a concentration of 5% to 15% by weight of the composition and wherein the oxygen content of the gases formed upon combustion is 0.1% to 5%.

2. A composition according to claim 1 wherein the slag former is clay or talc.

3. A composition according to claim 1 or 2 wherein the fuel is 5-aminotetrazole.

4. A composition according to any one of the preceding claims wherein the oxidizer is strontium nitrate.

5. A composition according to any one of claims 2 to 4, wherein the slag forming compound comprises clay and the catalyst comprises a zinc salt of 5-aminotetrazole.

6. A composition according to any one of claims 2 to 4, wherein the slag forming compound comprises talc and the catalyst comprises a copper salt of 5-aminotetrazole.

7. A composition according to any one of claims 2 to 4, wherein the slag forming compound comprises clay and the catalyst comprises a copper salt of 5-aminotetrazole.

8. A composition according to any one of claims 2 to 4, wherein the slag forming compound comprises clay and the catalyst comprises copper oxide.

9. A composition according to any one of claims 2 to 4, wherein the slag forming compound comprises talc and the catalyst comprises zinc oxide.

10. Use of a composition as claimed in any one of claims 1 to 9 in a vehicle occupant safety restraint device.

## Patentansprüche

1. Kein Azid enthaltendes Gas entwickelndes Vierkomponenten-Mittel, das beim Verbrennen Gase erzeugt und das geeignet ist zum Aufblasen von Sicherheits-Rückhaltevorrichtungen für Kraftfahrzeug-Insassen, wobei das Mittel mindestens eine jeder der folgenden funktionellen Gruppen von Substanzen umfaßt:
a. einen Treibstoff,
b. eine oxidierende Verbindung,
c. eine Schlacken bildende Verbindung und
d. einen Katalysator, der die Umwandlung von toxischen Stickstoffoxiden und Kohlenmonoxid zu Stickstoff und Kohlendioxid beschleunigt,
wobei der Treibstoff ausgewählt ist aus Tetrazolen, Bitetrazolen und Triazolen und in einer Konzentration von 26 bis 32 Gew.% des Mittels vorhanden ist, die oxidierende Verbindung ausgewählt ist aus anorganischen Nitraten, Chloraten oder Perchloraten von Alkali- oder Erdalkalimetallen und in einer Konzentration von 52 bis 58 Gew.% des Mittels vorhanden ist, die Schlacken bildende Verbindung ausgewählt ist aus Alkalimetalloxiden. -hydroxiden, -perchloraten, -nitraten, -chloraten, -silicaten, -boraten oder -carbonaten oder aus Erdalkali- und Übergangsmetallhydroxiden, -perchloraten, -nitraten oder -chloraten oder aus Siliciumdioxid, Erdalkalimetalloxiden und natürlichen und synthetisch hergestellten Magnesium- und Aluminiumsilicat-Verbindungen, wie natürlich vorkommendem oder synthetisch hergestelltem Ton und Talkum und in einer Konzentration von 2 bis 10 Gew.% des Mittels vorhanden ist, und der Katalysator ausgewählt ist aus einem Zinksalz von 5-Aminotetrazol, einem Kupfersalz von 5-Aminotetrazol, Kupferoxid und Zinkoxid und in einer Konzentration von 5 bis 15 Gew.% des Mittels vorhanden ist, und wobei der Sauerstoffgehalt der bei der Verbrennung gebildeten Gase 0,1 bis 5% beträgt.

2. Mittel nach Anspruch 1, wobei der Schlackenbildner Ton oder Talkum ist.

3. Mittel nach Anspruch 1 oder 2, wobei der Treibstoff 5-Aminotetrazol ist.

4. Mittel nach einem der vorangehenden Ansprüche, wobei das Oxidationsmittel Strontiumnitrat ist.

5. Mittel nach einem der Ansprüche 2 bis 4, wobei die Schlacken bildende Verbindung Ton umfaßt und der Katalysator ein Zinksalz von 5-Aminotetrazol umfaßt.

6. Mittel nach einem der Ansprüche 2 bis 4, wobei die Schlacken bildende Verbindung Talkum umfaßt und der Katalysator ein Kupfersalz von 5-Aminotetrazol umfaßt.

7. Mittel nach einem der Ansprüche 2 bis 4, wobei die Schlacken bildende Verbindung Ton umfaßt und der Katalysator ein Kupfersalz von 5-Aminotetrazol umfaßt.

8. Mittel nach einem der Ansprüche 2 bis 4, wobei die Schlacken bildende Verbindung Ton umfaßt und der Katalysator Kupferoxid umfaßt.

9. Mittel nach einem der Ansprüche 2 bis 4, wobei die Schlacken bildende Verbindung Talkum umfaßt und der Katalysator Zinkoxid umfaßt.

10. Verwendung eines Mittels nach einem der Ansprüche 1 bis 9 in einer Sicherheits-Rückhaltevorrichtungen für Kraftfahrzeug-Insassen.

## Revendications

1. Composition à quatre constituants, exempte d'azoture, génératrice de gaz, qui forme des gaz par combustion et qui est utile pour le gonflement d'un dispositif de maintien pour la sécurité de l'occupant d'un véhicule, composition qui comprend au moins un produit de chacune des catégories fonctionnelles suivantes de produits :
a) les combustibles,
b) les oxydants,
c) les composés formateurs de scories, et
d) les catalyseurs facilitant la transformation des oxydes d'azote et du monoxyde de carbone toxiques en azote gazeux et dioxyde de carbone,
le combustible étant choisi parmi les tétrazoles, les bistétrazoles et les triazoles et représentant 26 % à 32 % en poids de la composition, l'oxydant étant choisi parmi les nitrates, les chlorates ou les perchlorates minéraux de métaux alcalins ou alcalino-terreux et représentant 52 % à 58 % en poids de la composition, le composé formateur de scories étant choisi parmi les oxydes, hydroxydes, perchlorates, nitrates, chlorates, silicates, borates ou carbonates de métal alcalin, ou parmi les hydroxydes, perchlorates, nitrates ou chlorates de métal alcalino-terreux ou de métal de transition, ou parmi le dioxyde de silicium, les oxydes de métal alcalino-terreux et les silicates de magnésium et d'aluminium, naturels ou synthétiques, tels que l'argile et le talc d'origine naturelle ou préparé par synthèse, et représentant 2 % à 10 % en poids de la composition, et le catalyseur étant choisi parmi un sel de zinc du 5-aminotétrazole, un sel de cuivre du 5-aminotétrazole, l'oxyde de cuivre et l'oxyde de zinc et représentant 5 % à 15 % en poids de la composition, la teneur en oxygène des gaz formés par combustion étant de 0,1 % à 5 %.

2. Composition selon la revendication 1, dans laquelle le composé formateur de scories est de l'argile ou du talc.

3. Composition selon la revendication 1 ou 2, dans laquelle le combustible est le 5-aminotétrazole.

4. Composition selon l'une quelconque des revendications précédentes, dans laquelle l'oxydant est le nitrate de strontium.

5. Composition selon l'une quelconque des revendications 2 à 4, dans laquelle le composé formateur de scories comprend de l'argile et le catalyseur comprend un sel de zinc du 5-aminotétrazole.

6. Composition selon l'une quelconque des revendications 2 à 4, dans laquelle le composé formateur de scories comprend du talc et le catalyseur comprend un sel de cuivre du 5-aminotétrazole.

7. Composition selon l'une quelconque des revendications 2 à 4, dans laquelle le composé formateur de scories comprend de l'argile et le catalyseur comprend un sel de cuivre du 5-aminotétrazole.

8. Composition selon l'une quelconque des revendications 2 à 4, dans laquelle le composé formateur de scories comprend de l'argile et le catalyseur comprend de l'oxyde de cuivre.

9. Composition selon l'une quelconque des revendications 2 à 4, dans laquelle le composé formateur de scories comprend du talc et le catalyseur comprend de l'oxyde de zinc.

10. Utilisation d'une composition selon l'une quelconque des revendications 1 à 9, dans un dispositif de maintien pour la sécurité de l'occupant d'un véhicule.
